(19) Europäisches Patentamt
European Patent Office
Office européen des brevets

(11) Veröffentlichungsnummer: **0 023 066**
**B1**

(12) # EUROPÄISCHE PATENTSCHRIFT

(45) Veröffentlichungstag der Patentschrift: **23.04.86**

(51) Int. Cl.⁴: **C 03 C 17/245**

(21) Anmeldenummer: **80200683.3**

(22) Anmeldetag: **14.07.80**

(54) **Verfahren zur Herstellung von Lichtleitfasern.**

(30) Priorität: **19.07.79 DE 2929166**

(43) Veröffentlichungstag der Anmeldung: **28.01.81 Patentblatt 81/4**

(45) Bekanntmachung des Hinweises auf die Patenterteilung: **23.04.86 Patentblatt 86/17**

(84) Benannte Vertragsstaaten: **AT BE DE FR GB IT NL SE**

(56) Entgegenhaltungen:
**DE - A - 2 712 993**
**DE - C - 2 444 100**

**JOURNAL OF THE ELECTROCHEMICAL SOCIETY, Band 125, Nr. 8, August 1978, D. KÜPPERS et al. "Deposition of fluorine-doped silica layers frim a SiCl4/SiF4/02 gas micture by the plasma-CVD method", Seiten 1298-1302**

(73) Patentinhaber: **Philips Patentverwaltung GmbH, Billstrasse 80, D-2000 Hamburg 28 (DE)**
(84) Benannte Vertragsstaaten: **DE**

(73) Patentinhaber: **N.V. Philips' Gloeilampenfabrieken, Groenewoudseweg 1, NL-5621 BA Eindhoven (NL)**
(84) Benannte Vertragsstaaten: **BE FR GB IT NL SE AT**

(72) Erfinder: **Küppers, Dieter, Dr., Monheimsallee 27, D-5100 Aachen (DE)**

(74) Vertreter: **Piegler, Harald, Dipl.-Chem. et al, Philips Patentverwaltung GmbH Billstrasse 80 Postfach 10 51 49, D-2000 Hamburg 28 (DE)**

EP 0 023 066 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Vorformen für die Herstellung von Lichtleitfasern, wobei Quarzglas mit einer etwaigen Dotierung durch reaktive Abscheidung aus der Gasphase unter Einwirkung eines nichtisothermen Plasmas auf der Innenseite eines Quarzglasrohres angebracht wird und das innenbeschichtete Rohr zu einer massiven Vorform kollabiert.

Die daraus hergestellte Lichtleitfaser kann aus einem Kern aus dotiertem Quarzglas und einem Mantel aus Quarzglas bestehen oder aus einem Kern aus nicht dotiertem oder dotiertem Quarz und einem ersten Mantel aus dotiertem Quarzglas und einem äusseren Mantel aus Quarzglas bestehen.

In der DE-C-2 444 100 ist ein Verfahren beschrieben, nach welchem innenbeschichtete Glasrohre zum Ziehen von Lichtleitfasern hergestellt werden. Dabei wird ein nichtisothermes Plasma bei einem Druck von etwa 1,3 bis 13 mbar angewendet. Um gute, spannungsfreie Schichten zu erzeugen, ist es notwendig, das als Substrat dienende Glasrohr durch eine überlagerte Temperaturzone zu erhitzen. Bei diesem Verfahren werden direkt aus der Glasphase glasige Schichten gebildet. Es treten dabei normalerweise keine Glaspartikel auf.

Nach J. Electrochem. Soc. 125 (1978) 1298–1302 werden mit dem plasmaaktivierten CVD-Verfahren hochtransparente, dicke, mit Fluor dotierte Quarzglasschichten erhalten. Die Quarzglasschichten werden auf der Innenseite eines Quarzglasrohres abgeschieden, das einen Innendurchmesser von 8 mm hat. Aus den in diesem Dokument angegebenen Durchflussraten von $SiCl_4$ und $SiF_4$ lässt sich errechnen, dass die Abscheidungsgeschwindigkeit zwischen 0,02 und 0,08 g/min liegt.

Bei den Untersuchungen, die zur Erfindung geführt haben, hat es sich gezeigt, dass bei dem zuvor erwähnten Plasmaverfahren gegebenenfalls dann feine Glaspartikel gebildet werden können, wenn die Reaktionsbedingungen geändert werden. Solche Partikel sind aber mit dem in der DE-C-2 444 100 beschriebenen Verfahren absolut unvereinbar und müssen deshalb unter allen Umständen vermieden werden, weil es sich herausgestellt hat, dass diese Partikel sich bei diesem Verfahren nicht zu glasigen Schichten einschmelzen lassen, ohne dass auch das Rohr dabei schmilzt. Insbesondere Versuche, die Abscheidungsgeschwindigkeit zu erhöhen, können zu der Bildung dieser unerwünschten Glaspartikel führen.

Ferner hat es sich gezeigt, dass bei fest vorgegebener Abscheidungsgeschwindigkeit der Innendurchmesser des Rohres am Ende der Beschichtung möglichst klein sein soll, um ein geometrisch einwandfreies Kollabieren zu ermöglichen.

Die Aufgabe der Erfindung besteht demnach darin, ein Verfahren zu schaffen, mit dem unter Anwendung eines nichtisothermen Plasmas eine erhöhte Abscheidungsgeschwindigkeit erzielt wird, ohne dass störende feine Glaspartikel in der Gasphase auftreten, wobei der Innendurchmesser des Rohres nach dem Beschichtungsprozess so klein wie möglich ist, um eine problemlose Kollabiering zu gewährleisten.

Diese Aufgabe wird erfindungsgemäss dadurch gelöst, dass die Abscheidungsgeschwindigkeit M grösser als 0,08 g/min ist und so eingestellt wird, dass während der Beschichtung

$$\left(\frac{M}{A_I}\right)^{1/3,58} \cdot 1\,\text{mm} \leqq d_I \text{ ist,}$$

wobei $d_I$, der Innendurchmesser des Rohres im Augenblick der Abscheidung grösser als 6 mm ist und $A_I$ den Wert $1{,}42 \cdot 10^{-4}$ g/min besitzt.

Bei den Versuchen, die zur Erfindung geführt haben, hat es sich gezeigt, dass dieser überraschend einfache Zusammenhang zwischen dem Rohrinnendurchmesser während der Abscheidung und der maximalen Abscheidungsgeschwindigkeit, bei der noch keine feinen Glaspartikel in der Gasphase auftreten, besteht. Der Wert für $A_I$ wurde dabei experimentell festgestellt.

Es hat sich weiter gezeigt, dass ein geometrisch einwandfreies Kollabieren der nach der Erfindung beschichteten Quarzglasrohre immer dann gesichert ist, wenn die Abscheidung so lange fortgesetzt wird, bis der Innendurchmesser $d_{II}$

$$\left(\frac{M}{A_{II}}\right)^{1/3,04} \cdot 1\,\text{mm} \geqq d_{II} \text{ ist,}$$

wobei M denselben Wert wie zuvor besitzt und $A_{II}$ den Wert $6{,}63 \cdot 10^{-5}$ g/min besitzt.

Die so hergestellte Vorform wird in an sich bekannter Weise zu einer Faser ausgezogen.

Die Erfindung wird anhand einer Zeichnung und mit einigen Ausführungsbeispielen näher erläutert.

In der Zeichnung zeigen

Fig. 1 den Zusammenhang zwischen abgeschiedener Quarzglasmenge und Rohrinnendurchmesser in Form eines Schaubildes und

Fig. 2 eine Vorrichtung zum Innenbeschichten von Glasrohren in schematischer Darstellung.

In Fig. 1 ist die gemäss der Reaktionsgleichung

$$SiCl_4 + O_2 \rightarrow SiO_2 + 2Cl_2$$

abgeschiedene Menge Quarzglas M mit einer etwaigen Dotierung in g/min gegen den verwendeten Rohrinnendurchmesser d aufgetragen. Das Dotiermittel wird ebenfalls in Form eines Halogenids verwendet. Man sieht, dass die Ebene in drei Teile zerfällt: In die Gebiete A, B und C. Es hat sich nun gezeigt, dass bei gegebenem Rohrinnendurchmesser die Abscheidungsgeschwindigkeit unterhalb der Geraden I bleiben sollte, denn hier findet keine Bildung von feinen Glaspartikeln in

der Gasphase statt. In dem oberen Bereich A dagegen ist die Bildung stark ausgeprägt. Dementsprechend besteht hier das abgeschiedene Material unter anderem aus feinen Glaspartikeln, die aber beim Plasmaverfahren unbedingt zu vermeiden sind.

Die Grenzgerade I wird beschrieben durch

$$d_I = \left( \frac{M}{A_I} \right)^{1/3,58} \cdot 1mm$$

wobei M die Menge Kernglasmaterial in Gramm ist, die pro Minute abgeschieden wird, d der Innendurchmesser des Rohres in mm ist, der auf der Geraden I liegt, und $A_I = 1,42 \cdot 10^{-4}$ g/min beträgt.

Ein weiterer wichtiger Gesichtspunkt ist die Beachtung des nachfolgenden Kollabierungsprozesses. Das zu beschichtende Ausgangsrohr und die Dicke der abzuscheidenden Schicht sollten so gewählt werden, dass der nachfolgende Kollabierungsschritt keine zusätzlichen Probleme aufwirft. Ganz allgemein kann man sagen, dass der Innendurchmesser des Rohres am Ende des Abscheidungsvorgangs vor dem Kollabieren so klein wie möglich sein sollte, denn jeder zusätzliche mm erhöht die Gefahr, dass Fehler beim Kollabieren auftreten, wie Entstehen einer elliptischen Vorform, einer über die Länge durchgebogenen Vorform oder anderer geometrischer Fehler. Die Rotationssymmetrie des beschichteten Rohres kann am besten gewahrt werden, wenn der Kollabierungsschritt möglichst klein ist.

Aus dem Gesagten folgt, dass der Innendurchmesser des zu kollabierenden Rohres möglichst klein sein sollte. Diese Forderung muss aber obige Gleichung für $d_I$ beachten, die eine untere Grenze für den Innendurchmesser beim Beschichten angibt. Es hat sich nun bei Experimenten gezeigt, dass der Bereich B alle diese Forderungen gut erfüllt. Dabei ist zu berücksichtigen, dass das Rohr während der Beschichtung seinen Innendurchmesser verringert und der Endpunkt unterhalb der Geraden $d_I$ liegen sollte. Die Grenze II ist durch folgenden Ausdruck gegeben:

$$\left( \frac{M}{A_{II}} \right)^{1/3,04} \cdot 1mm = d_{II}$$

wobei $A_{II} = 6,63 \cdot 10^{-5}$ g/min, M dieselbe Bedeutung wie oben hat und $d_{II}$ der Durchmesser des Rohres ist, der auf der Geraden II liegt.

Ferner sind in Fig. 1 die Begrenzungen G1 und G2 eingezeichnet. Unterhalb von etwa 6 mm Rohrinnendurchmesser sind nämlich die erreichbaren Abscheidungsgeschwindigkeiten so gering, dass sie ökonomisch uninteressant werden; bei einem Innendurchmesser von über 30 mm lässt sich das beschichtete Rohr nur sehr schwierig zu einer massiven, blasenfreien, zylindrischen Vorform kollabieren. Die angegebenen Gleichungen sind besonders dann wichtig, wenn man, um den Kollabierungsschritt zu verkürzen, eine möglichst dicke Schicht auf der Innenseite des Rohres anbringt. Da dann der Innendurchmesser des Rohres laufend kleiner wird, muss man auch die Abscheidungsgeschwindigkeit entsprechend anpassen. Man kann dann zunächst mit einer hohen Abscheidungsgeschwindigkeit beginnen, muss sie dann aber laufend reduzieren, wenn sich der Innendurchmesser verkleinert. Man sollte dabei möglichst immer im Bereich B bleiben.

Die Temperatur des Substratrohres befand sich bei den Experimenten im Bereich von etwa 1000 °C bis 12000 °C. Auch bei den hohen Abscheidungsgeschwindigkeiten erhält man eine nahezu vollständige Ausbeute, d.h. das gesamte in das Rohr eingespeiste $SiCl_4$ zusammen mit dem etwaigen Dotiermittel in Form eines Halogenids wird mit Hilfe des Sauerstoffs im Bereich der Mikrowellenentladung in $SiO_2$ und das Dotiermittel in die Form eines Oxids umgewandelt. Deshalb kann man den zu jeder gewünschten Abscheidungsgeschwindigkeit notwendigen und hinreichenden Halogenid- ($SiCl_4$ + Dotiermittel in Form des Halogenids) Gasstrom einfach bestimmen. Der Sauerstoffstrom ergibt sich daraus, dass der Gesamtdruck in der Reaktionszone vorzugsweise im Bereich von 1 bis 27 mbar liegt, und dass der Sauerstoffstrom aus stöchiometrischen Gründen mindestens so gross wie der Halogenid-Strom sein muss. Ein dreifacher oder grösserer Überschuss hat sich als günstig herausgestellt. Als Dotiermittel in Form des Halogenids können z.B. $GeCl_4$, $BCl_3$, $SiF_4$, $PCl_3$ und andere bekannte Dotiermittel verwendet werden.

Das Plasma ist für die Aktivierung der Reaktion notwendig und es benötigt bei einer grösseren Zahl von zu aktivierenden Molekülen pro Zeiteinheit auch eine grössere Leistungszufuhr. Eine zu geringe Mikrowellenleistung macht sich durch die Abscheidung von undurchsichtigen Schichten bemerkbar. In der Praxis stellt man die benötigte Leistung dadurch fest, dass man in einem Vorversuch die zugeführte Mikrowellenleistung so lange erhöht, bis die Schichten glasklar abgeschieden werden.

Insbesondere ist darauf zu achten, dass die zugeführte Mikrowellenleistung mindestens so gross ist, dass der Durchmesser des Rohres vollständig mit dem Plasma ausgefüllt ist. Ferner ist eine rotationssymmetrische Energiedichte im Rohr für ein rotationssymmetrisches Abscheidungsprofil erforderlich. Werden die hier genannten Bedingungen erfüllt, so stellt man fest, dass die abgeschiedenen Schichten von faseroptischer Qualität sind, und zwar unabhängig von der Abscheidungsgeschwindigkeit.

Bei einem isothermen Plasma, auch heisses Plasma genannt, ist die Elektronentemperatur gleich der Gastemperatur. Beide liegen typischerweise in der Grösse von einigen zehntausend Grad. Bei einem nichtisothermen Plasma, auch kaltes Plasma genannt, wie es beim erfindungsgemässen Verfahren angewandt wird, ist die Elektronentemperatur wesentlich höher als die Gastemperatur. Die Elektronentemperatur besitzt typischerweise Werte von einigen 10000 K, die Gastemperatur erhöht sich typischerweise – abhängig von Gasart und Druck – höchstens um einige 100 K.

Die nachfolgenden Ausführungsbeispiele wurden in einer Vorrichtung gemäss Fig. 2 durchgeführt. In Fig. 2 ist die Abscheidung von $SiO_2$-Glas 1 aus einem Gasgemisch $SiCl_4/O_2$ und einem etwaigen Dotiermittel in Form eines Halogenids 2 auf der Innenwandung eines Quarzglasrohres 3 dargestellt. Das Gasgemisch 2 wird in Pfeilrichtung durch das Rohr 3 geleitet. Ein lokales nichtisothermes Plasma 4 wird durch Ringelektroden 5 erzeugt und entweder induktiv oder kapazitiv angekoppelt, oder in einem Mikrowellenresonator erzeugt. Mit dem unterhalb der Vorrichtung eingezeichneten Pfeil ist eine in Achsrichtung erfolgende Relativbewegung zwischen dem Rohr 3 und der plasmaerregenden Vorrichtung angedeutet. Dem Plasma 4 wird mittels eines Ofens 6 eine Temperaturzone überlagert, die den Plasmabereich überschreitet.

Beispiel 1

Die Innenseite eines Quarzglasrohres wurde mit Quarzglas beschichtet, das mit $GeO_2$ und $B_2O_3$ dotiert war. Die verwendete Mikrowellenfrequenz betrug 2,45 GHz, die Geschwindigkeit der Reaktionszone betrug 3 m/min, die Länge des Abscheidungsbereiches 35 cm. Die Substrattemperatur betrug 1050 °C, der Gesamtdruck betrug 13 mbar. Die Mikrowellenleistung war 200 W. Das verwendete Quarzrohr hatte einen Innendurchmesser von 6 mm und einen Aussendurchmesser von 8 mm. Der $SiCl_4$-Strom betrug 30 $cm^3$/min (bezogen auf Standardbedingungen, Temperatur 0 °C, Druck 1 bar – dies gilt auch für die folgenden Angaben dieser Art), der $GeCl_4$-Strom wurde linear mit der Zeit bis zum Ende des Versuches von 0 $cm^3$/min auf 4 $cm^3$/min erhöht. der $O_2$-Strom betrug 150 $cm^3$/min und der $BCl_3$-Strom 3 $cm^3$/min. Die Abscheidungsgeschwindigkeit betrug 0,08 g/min. Diese Abscheidungsgeschwindigkeit lag schon an der kritischen Grenze. Eine weitere Erhöhung der Abscheidungsgeschwindigkeit führte zur Bildung von feinen Glaspartikeln in der Gasphase.

Beispiel 2

Gegenüber dem Beispiel 1 wurden folgende Bedingungen geändert: Der Innendurchmesser mit 8 mm, der Aussendurchmesser mit 10 mm, der $SiCl_4$-Strom, der hier 60 $cm^3$/min betrug, der $CeCl_4$-Strom, der von 0 auf 7,5 $cm^3$/min erhöht wurde, der $BCl_3$-Strom mit 5 $cm^3$/min und der Gesamtdruck mit 20 mbar. Es ergab sich eine Abscheidungsgeschwindigkeit von 0,15 g/min.

Beispiel 3

Es wurde mit einer Mikrowellenleistung von 500 W gearbeitet. Das verwendete Quarzglasrohr besass einen Innendurchmesser von 11,5 mm und einen Aussendurchmesser von 14 mm. Der $SiCl_4$-Strom betrug zu Anfang 132 $cm^3$/min und wurde zum Zeitpunkt $t_o$ linear bis auf 116 $cm^3$/min erniedrigt. Der $BCl_3$-Strom lag zunächst bei 21 $cm^3$/min und wurde allmählich auf 7,5 $cm^3$/min erniedrigt. Der $GeCl_4$-Strom wurde linear mit der Zeit von 0 $cm^3$/min auf den Endwert von 16 $cm^3$/min erhöht. Der Sauerstoffstrom betrug 500 $cm^3$/min und stieg vom Ausganszeitpunkt an linear mit der Zeit auf 595 $cm^3$/min an. Die mittlere Abscheidungsgeschwindigkeit betrug 0,3 g/min. Die Substrattemperatur betrug 1050 °C, der Druck in der Reaktionszone lag bei 13 mbar.

Beispiel 4

Gegenüber Beispiel 3 wurden verändert:

Der Innendurchmesser mit 16 mm, der Aussendurchmesser mit 18 mm, der $SiCl_4$-Strom betrug 177 $cm^3$/min, der $GeCl_4$-Strom wurde linear mit der Zeit bis zum Ende des Versuches von 0 $cm^3$/min auf 20 $cm^3$/min erhöht, der $BCl_3$-Strom betrug 10 $cm^3$/min, der Sauerstoffstrom betrug 720 $cm^3$/min. Die Abscheidungsgeschwindigkeit betrug 0,45 g/min bei einem Gesamtdruck im Reaktionsrohr von 25 mbar.

Nach dem Beschichten wurden alle Rohre kollabiert. Hierzu wird ein Brenner mehrfach längs des beschichteten Quarzrohres hin- und hergefahren. Dabei wird das Rohr lokal auf eine Temperatur von etwa 2000 °C gebracht, also über den Erweichungspunkt, und schrumpft in mehreren Schritten zu einem Stab (Vorform). Von den so erhaltenen Vorformen wurden Fasern gezogen, die einen Kern von 47µm und einen Aussendurchmesser von 120 µm hatten. Hierzu wird die Vorform mit Hilfe eines Ofens oder eines Ringbrenners auf etwa 2000 °C erhitzt. An 1 km langen Faserabschnitten wurden die optischen Daten gemessen. Die optischen Verluste aller Fasern lagen bei der Messwellenlänge von 0,85 µm unter 5 dB/km und die Pulsverbreiterungen waren kleiner als 1,5 ns/km.

Das beschriebene Verfahren lässt sich sowohl bei der Abscheidung von dotiertem als von nichtdotiertem Quarzglas anwenden, und zwar bei der Herstellung von Monomoden- und Multimodenfasern. Bei der Abscheidung von dotiertem Quarzglas kann die Dotierung während des Abscheidens konstant gehalten werden (Stufenindexfaser), oder auch zu- oder abnehmen (Gradientenfaser).

**Patentansprüche**

Verfahren zur Herstellung von Vorformen für die Herstellung von Lichtleitfasern, wobei Quarzglas mit einer etwaigen Dotierung durch reaktive Abscheidung aus der Gasphase unter Einwirkung eines nichtisothermen Plasmas auf der Innenseite eines Quarzglasrohres angebracht wird und das innenbeschichtete Rohr zu einer massiven Vorform kollabiert wird, dadurch gekennzeichnet, dass die Abscheidungsgeschwindigkeit M grösser als 0,08 g/min ist und so eingestellt wird, dass während der Beschichtung

$$\left(\frac{M}{A_i}\right)^{1/3,58} \cdot 1\,mm \leqq d_i \text{ ist,}$$

wobei $d_I$, der Innendurchmesser des Rohres im Augenblick der Abscheidung, grösser als 6 mm ist und $A_I$ den Wert $1{,}42 \cdot 10^{-4}$ g/min besitzt.

2. Verfahren nach Anspruch 1, dadurch gekennzeichnet, dass die Abscheidung solange fortgesetzt wird, bis der Innendurchmesser $d_{II}$

$$\left(\frac{M}{A_{II}}\right)^{1/3{,}04} \cdot 1\,\text{mm} \geqq d_{II} \text{ ist,}$$

wobei M denselben Wert wie in Anspruch 1 besitzt und $A_{II}$ den Wert $6{,}63 \cdot 10^{-5}$ g/min besitzt.

3. Verfahren zur Herstellung von Lichtleitfasern, wobei eine nach den Ansprüchen 1 und 2 hergestellte Vorform in an sich bekannter Weise zu einer Faser ausgezogen wird.

## Claims

1. A method of producing preforms for the manufacture of optical fibres in which silica glass with or without a dopant is reactively deposited from the gaseous phase on the inside of a silica glass tube by the action of a non-isothermal plasma, the tube coated on its inside then being collapsed to form a solid preform, characterized in that the deposition rate M exceeds 0.08 g/min and is adjusted so that during deposition:

$$\left(\frac{M}{A_I}\right)^{1/3{,}58} \cdot 1\,\text{mm} \leqq d_I$$

in which $d_I$, the inside diameter of the tube at the moment of deposition exceeds 6 mm and $A_I$ has the value $1{,}42 \cdot 10^{-4}$ g/min.

2. A method as claimed in Claim 1, characterized in that the deposition is continued until the inside diameter $d_{II}$ is

$$\left(\frac{M}{A_{II}}\right)^{1/3{,}04} \cdot 1\,\text{mm} = d_{II}$$

wherein M has the same value as in Claim 1 and $A_{II}$ has the value $6.63 \cdot 10^{-5}$ g/min.

3. A method of producing optical fibres, in which a preform manufactured according to the claim 1 or claim 2 is drawn in known manner to form a fibre.

## Revendications

1. Procédé pour la fabrication de préformes pour la réalisation de fibres optiques, selon lequel du verre de quartz éventuellement dopé est appliqué par dépôt réactif à partir de la phase gazeuse sous l'action d'un plasma non isotherme sur la face intérieure d'un tube en verre de quartz et le tube recouvert à l'intérieur est soumis à contraction de façon à obtenir une préforme massive, caractérisé en ce que la vitesse de dépôt M est supérieure à 0,08 g/min et est établie de façon que, lors du recouvrement

$$\left(\frac{M}{A_I}\right)^{1/3{,}58} \cdot 1\,\text{mm} \leqq d_I$$

$d_I$ le diamètre intérieur du tube au moment de dépôt, étant supérieur à 6 mm et $A_I$ présentant la valeur $1{,}42.10^{-4}$ g/min.

2. Procédé selon la revendication 1, caractérisé en ce que le dépôt s'est poursuivi aussi longtemps que le diamètre inférieur $D_{II}$

$$\left(\frac{M}{A_{II}}\right)^{1/3{,}04} \cdot 1\,\text{mm} = d_{II}$$

3. Procédé pour la réalisation de fibres optiques, selon lequel une préforme réalisée suivant les revendications 1 et 2 est étirée de façon connue en une fibre.

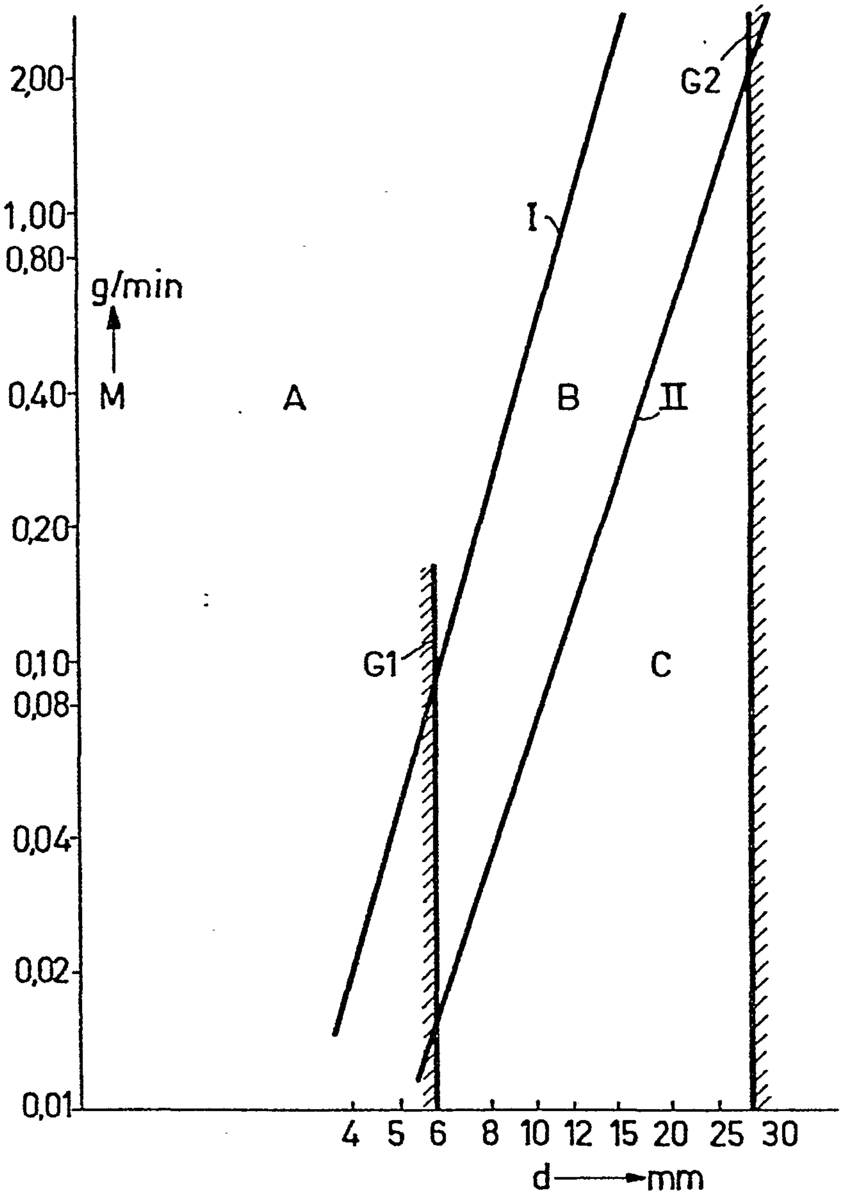
2,00
1,00
0,80
g/min
M
0,40
0,20
0,10
0,08
0,04
0,02
0,01
A
B
C
I
II
G1
G2
4 5 6 8 10 12 15 20 25 30
d mm

FIG.1

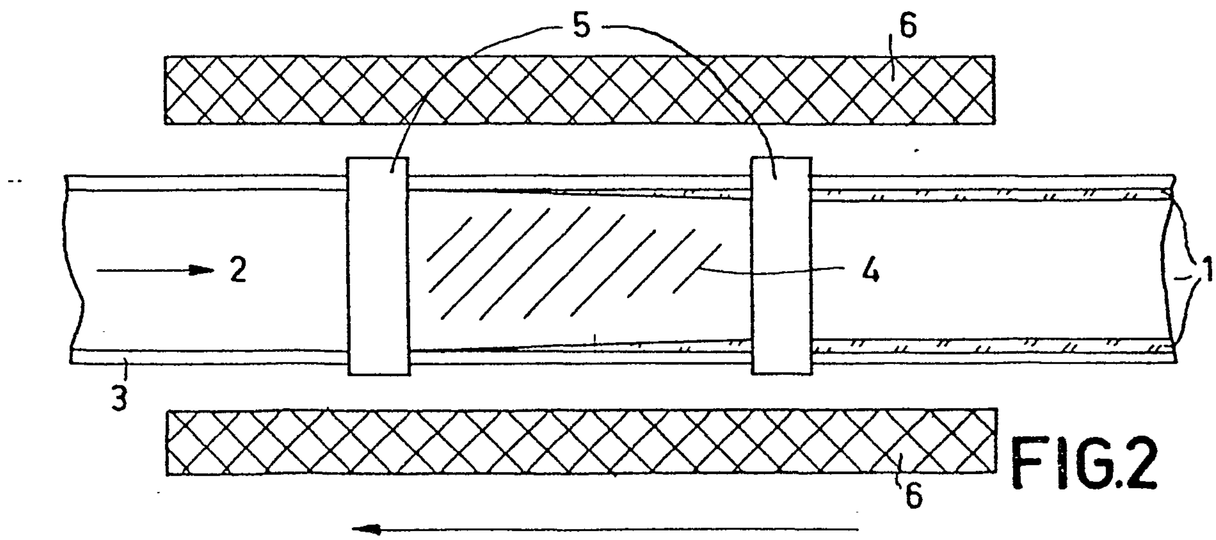
5
6
2
4
1
3
6

FIG.2